# FASCICULE DE BREVET EUROPEEN

(11) **EP 1 715 564 B1**
(45) Date de publication et mention de la délivrance du brevet: **07.09.2011**
(21) Numéro de dépôt: 06290238.2
(22) Date de dépôt: 10.02.2006
(51) Int. Cl.: H02K 7/102, F16D 59/02, F16D 65/18

(54) **Dispositif de freinage d'un arbre rotatif d'une source d'entraînement, telle qu'un moteur électrique**
Bremsvorrichtung für die Drehwelle eines Antriebs, wie ein Elektromotor
Braking device for the rotating shaft of a driving source like an electric motor

(30) Priorité: 19.04.2005 FR 0503890
(43) Date de publication de la demande: 25.10.2006
(73) Titulaire: Warner Electric Europe S.A.S, 49124 St-Barthélémy d'Anjou (FR)
(72) Inventeur: Ferrand, Gilles, 49124 Saint Barthélémy d'Anjou (FR)
(74) Mandataire: CAPRI

(56) Documents cités:
- EP-A- 0 796 814
- EP-A- 1 028 081
- EP-A- 1 411 018
- DE-U- 7 146 345
- US-A- 3 556 266
- US-A- 4 042 077

## Description

La présente invention concerne un dispositif de freinage d'un arbre rotatif d'une source d'entraînement, telle qu'un moteur électrique.

On connaît un tel dispositif comprenant un disque de frein à garnitures de friction solidaire en rotation de l'arbre rotatif et axialement mobile à ce dernier et une unité d'actionnement logée dans un boîtier solidaire du carter de support de la source d'entraînement coaxialement à l'arbre rotatif à freiner, l'unité d'actionnement, qui peut être du type électromagnétique, hydraulique ou pneumatique, pouvant être commandée pour déplacer axialement le disque de frein et le presser contre une partie correspondante du carter du support, afin de freiner ce disque et, par conséquent, bloquer en rotation l'arbre rotatif. DE 7 146 345 U montre un tel dispositif.

Le fait que le boîtier de l'unité d'actionnement de ce frein soit monté à l'arrière du moteur coaxialement à son arbre moteur ne permet pas une modularité du dispositif de freinage et la redondance nécessite l'ajout d'un second frein ou d'un frein plus gros avec une armature mobile scindée en deux dans le cas où l'unité d'actionnement est notamment du type électromagnétique, ce qui se traduit par une augmentation considérable des dimensions du dispositif de freinage. En outre, l'augmentation des couples de freinage nécessite un changement de taille du frein, ce qui se traduit également par une augmentation des dimensions de celui-ci.

On connaît également un dispositif de freinage selon lequel le disque de frein à garnitures de friction est solidaire en rotation et en translation de l'arbre rotatif du moteur et une pince ou étrier de frein est monté au carter de support du moteur en étant mobile parallèlement à l'arbre moteur pour freiner le disque de frein. EP 1 411 018 montre un tel dispositif.

Si un tel dispositif de freinage permet une modularité et une augmentation des couples de freinage en multipliant le nombre de freins sur le même disque de frein, son implantation se traduit par une augmentation des dimensions extérieures du moteur et il nécessite le rajout d'un disque de frein en acier ou en fonte sur l'arbre moteur, ce qui augmente l'inertie de la partie tournante de ce moteur ainsi que les coûts du dispositif de freinage.

La présente invention a pour but d'éliminer les inconvénients ci-dessus des dispositifs connus en proposant un dispositif de freinage d'un arbre rotatif d'une source d'entraînement, telle qu'un moteur électrique, solidaire d'un carter de support, et comprenant au moins un disque de frein solidaire en rotation de l'arbre rotatif et axialement mobile à ce dernier et au moins une unité d'actionnement logée dans un boîtier solidaire du carter de support et par laquelle le disque de frein peut être déplacé axialement pour le presser contre une partie du carter de support et freiner l'arbre rotatif par l'intermédiaire de garnitures de friction, et qui est caractérisé en ce que le boîtier de l'unité d'actionnement est fixé au carter de support à une position radiale du disque de frein par des moyens de fixation situés à l'extérieur du disque de frein de façon que le boîtier de l'unité d'actionnement forme avec le carter de support un étrier fixe de frein.

Avantageusement, les moyens de fixation comprennent des vis traversant respectivement des perçages du boîtier de l'unité d'actionnement situés à la périphérie externe de ce boîtier et s'étendant parallèlement à l'arbre rotatif en étant ancrées dans des trous taraudés du carter de support.

Les vis de fixation traversent des entretoises interposées entre le boîtier de l'unité d'actionnement et le carter de support et vissées dans des trous taraudés de ce carter coaxiaux aux trous taraudés d'ancrage des vis de fixation.

Deux garnitures de frein annulaires sont disposées entre d'une part le disque de frein et la partie correspondante du carter de support et d'autre part un organe commandé axialement mobile de l'unité d'actionnement et le disque de frein.

Les deux garnitures de friction sont fixées par collage soit de chaque côté du disque de frein au bord externe de ce dernier, soit à l'organe commandé axialement mobile et à une pièce rapportée de carter de support.

Le dispositif peut comporter deux ou plusieurs unités d'actionnement dont les boîtiers sont fixés au carter de support radialement au disque de frein en étant régulièrement espacés autour de ce dernier.

De préférence, le disque de frein comprend une âme en aluminium.

L'unité d'actionnement peut être du type électromagnétique comprenant une bobine d'inducteur montée dans le boîtier de l'unité d'actionnement et pouvant déplacer axialement une armature mobile dans ce boîtier constituant l'organe commandé à une position active ou inactive de freinage de l'arbre rotatif à laquelle le disque de frein est pressé ou non contre la partie correspondante du carter de support.

L'armature mobile est pressée contre la garniture correspondante du disque de frein par au moins deux ressorts de compression montés précontraints dans le boîtier de l'unité d'actionnement concentriquement à l'arbre rotatif et la bobine d'inducteur peut être alimentée pour rappeler l'armature mobile à sa position inactive de freinage à l'encontre de la force de rappel des ressorts.

Selon une variante, l'unité d'actionnement peut être du type à commande pneumatique ou hydraulique.

Le boîtier de l'unité d'actionnement est en forme de cylindre ou de parallélépipède rectangle.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant deux modes de réalisation de l'invention et dans lesquels :
- la figure 1 est une vue en perspective d'un dispositif de freinage conforme à l'invention ;
- la figure 2 est une vue suivant la flèche II du dispositif de freinage de la figure 1 ;
- la figure 3 est une vue en coupe suivant la ligne III-III de la figure 2 ;
- la figure 4 est une vue en perspective éclatée du dispositif de freinage de la figure 1 ;
- la figure 5 est une vue en perspective d'une variante de réalisation du dispositif de freinage de l'invention ;
- la figure 6 est une vue de côté suivant la flèche VI du dispositif de freinage de la figure 5 ; et
- la figure 7 est une vue en perspective d'une autre variante de réalisation du dispositif de freinage de l'invention.

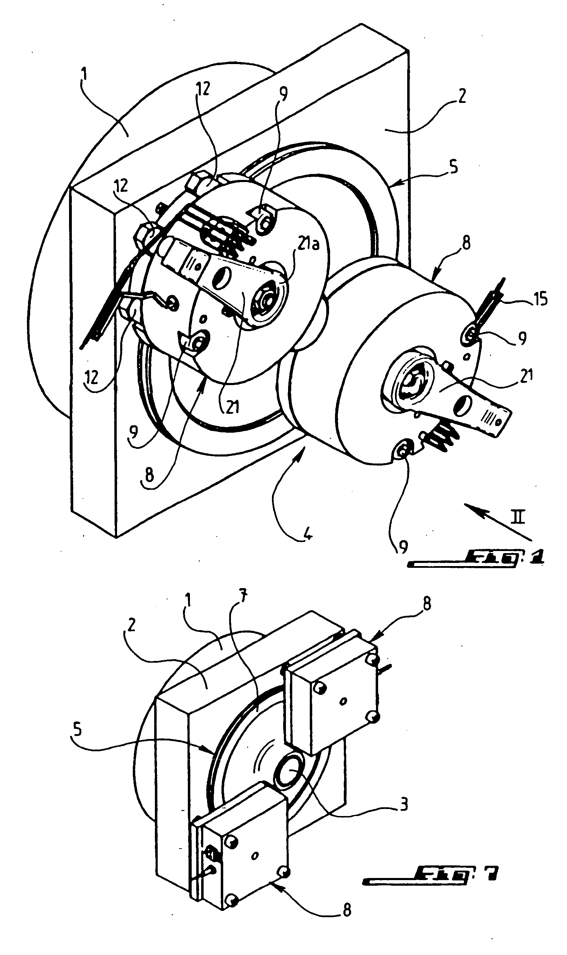

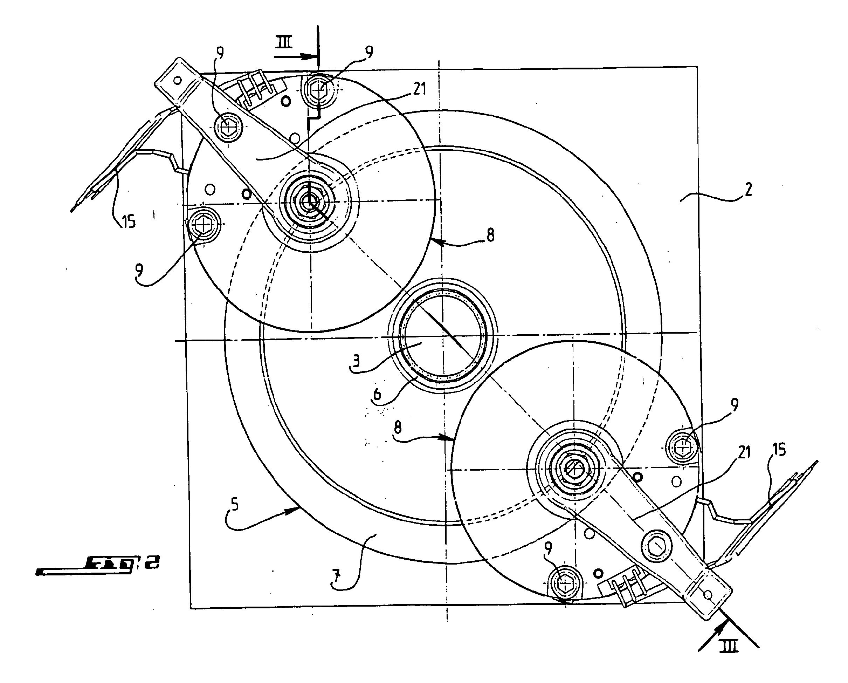

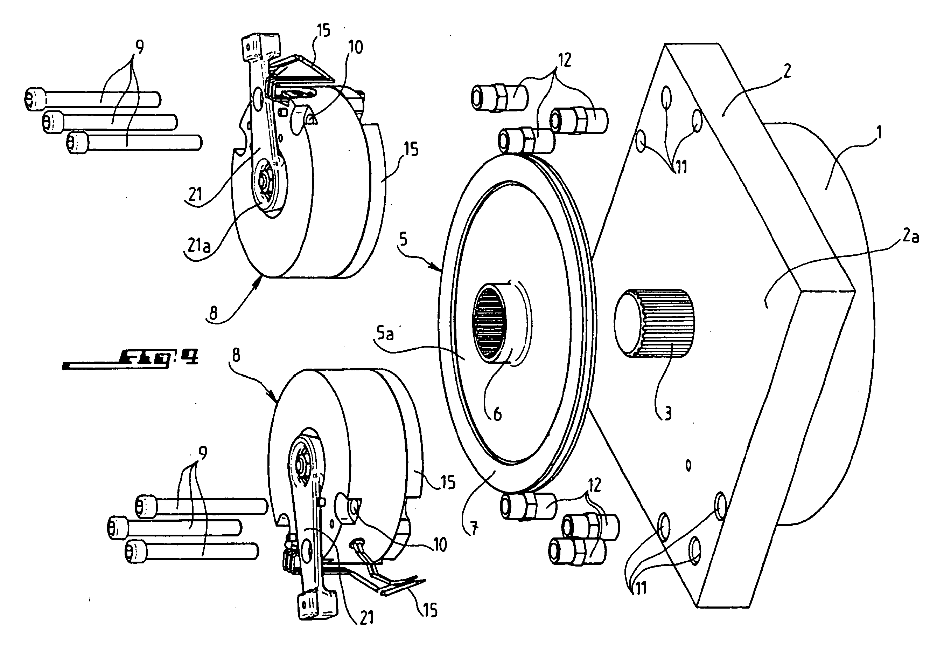

En se reportant tout d'abord aux figures 1 à 4, la référence 1 désigne un moteur électrique fixé par tout moyen approprié à un carter de support 2 et dont l'arbre moteur 3, monté à rotation dans le carter 2, fait saillie de ce dernier à l'opposé du moteur 1.

Un dispositif de freinage 4 est prévu pour freiner et arrêter l'arbre rotatif 3.

A titre d'exemple non limitatif, l'ensemble à moteur électrique 1 et dispositif de freinage 4 peut être utilisé pour la motorisation d'ascenseurs, étant bien entendu qu'il peut être utilisé pour d'autres applications nécessitant le freinage de l'arbre moteur 3.

Le dispositif de freinage 4 comprend un disque de frein 5 solidaire en rotation de l'arbre moteur 3 par l'intermédiaire de son moyeu 6 intérieurement cannelé monté sur l'arbre cannelé 3, une telle liaison cannelée permettant ainsi au disque de frein 5 d'être déplacé axialement sur l'arbre 3 vers le carter de support 2. Le disque de frein comprend deux garnitures de friction annulaires planes 7 fixées, par exemple par collage, de chaque côté du disque de frein 5 à la périphérie externe de ce dernier.

Le dispositif de freinage 4 comprend en outre au moins une unité d'actionnement logée dans un boîtier 8 solidaire du carter 2 et permettant, lorsque commandée, de déplacer axialement le disque de frein 5 sur l'arbre moteur 3 pour presser la garniture de friction 7 sur une partie de face plane correspondante 2a formant flasque du carter 2 de manière à freiner la rotation du disque 5 et de l'arbre moteur 3.

Selon l'invention, le boîtier 8 de l'unité d'actionnement est fixé au carter 2 à une position radiale du disque de frein 5 par des moyens de fixation situés à l'extérieur du disque de frein 5 de façon que le boîtier 8 de l'unité d'actionnement forme avec le carter 2 un étrier fixe de frein.

Les figures 1 à 4 montrent que le dispositif de freinage comporte deux boîtiers 8 à unités d'actionnement fixés au carter 2 radialement au disque de frein 5 en étant diamétralement opposés l'un de l'autre. Cependant, le dispositif de freinage 4 peut comporter un plus grand nombre de boîtiers 8 à unités d'actionnement, par exemple trois ou quatre boîtiers 8 fixés au carter 2 radialement au disque de frein 5 et régulièrement espacés autour de ce disque de façon que chaque boîtier 8 forme un étrier ou pince fixe de frein.

Les moyens de fixation de chaque boîtier 8 à unité d'actionnement comprennent au moins deux vis 9 traversant respectivement deux perçages 10 du boîtier 8 situés à la périphérie externe de ce dernier et s'étendant parallèlement et concentriquement à l'arbre rotatif 3 en étant ancrées dans des trous taraudés correspondants 11 du carter 2.

Le cas échéant, les vis de fixation 9 traversent des entretoises 12 interposées entre le boîtier 8 et le carter 2 et qui sont vissées dans des trous taraudés 11a du carter 2 coaxiaux aux trous taraudés 11 d'ancrage des vis 9 et de plus grand diamètre que ces derniers. Ainsi, les entretoises 12 peuvent être réglées à une position relative au carter 2 permettant de fixer précisément le boîtier 8 par rapport au carter 2 en direction axiale parallèle à l'arbre 3.

Avantageusement, le disque de frein 5 a son âme 5a réalisée en métal léger, tel que par exemple de l'aluminium.

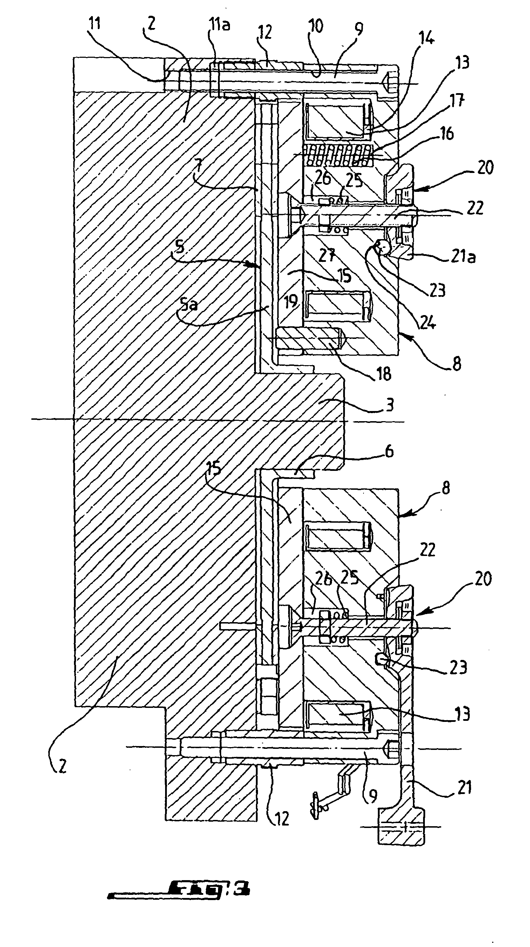

L'unité d'actionnement électromagnétique logée dans chaque boîtier 8 comme représenté en détail en figure 3 comprend une bobine d'inducteur annulaire 13 logée dans une coquille correspondante 14 fixée dans le boîtier inducteur 8, les fils 15 d'alimentation en énergie électrique de la bobine 13 traversant la coquille 14 et le boîtier 8 pour être reliés à une source d'alimentation extérieure non représentée.

L'unité d'actionnement comprend en outre une armature métallique mobile 15 pouvant être déplacée axialement parallèlement à l'arbre 3 vers le carter 2 par au moins deux ressorts hélicoïdaux 16 montés précontraints concentriquement à l'arbre 3 dans des trous borgnes 17 du boîtier 8.

Selon cette configuration de frein électromagnétique, la bobine d'inducteur 13 est alimentée de manière à rappeler l'armature mobile 15 à l'encontre de la force de rappel des ressorts 16 à une position à laquelle le disque de frein 5 est libre de tourner avec l'arbre rotatif 3. Lors d'une opération de freinage, la bobine d'inducteur 14 n'est plus alimentée et les ressorts 17 exercent sur l'armature mobile 15 un effort la déplaçant vers le carter 2 de manière à presser les garnitures de friction 7 du disque de frein 5 entre le flasque correspondant du carter 2 et cette armature pour freiner le disque 5 et, par conséquent, bloquer en rotation l'arbre 3.

L'armature mobile 15 de chaque unité d'actionnement est guidée en translation relativement au boîtier 8 en direction parallèle à l'arbre 3 par plusieurs pions de guidage 18 ancrés dans le boîtier 8 et dont les extrémités libres faisant saillie de ce boîtier traversent avec jeu respectivement des trous traversants 19 de l'armature 15 formés au voisinage de son orifice central entourant concentriquement l'arbre 3.

Comme cela est connu en soi, chaque boîtier 8 peut être pourvu d'un mécanisme 20 de déblocage manuel de l'armature 15 à partir de sa position de freinage du disque de frein 5. Un tel mécanisme comprend essentiellement une poignée ou bras de manoeuvre 21 solidaire de l'extrémité d'un axe cylindrique 22 traversant le boîtier 8 et pouvant être entraîné en translation dans ce boîtier parallèlement à l'arbre 3 en sens opposé au carter 2 lors d'une rotation exercée sur le bras 21 de manière à éloigner l'armature 15 de ce carter. Pour cela, l'axe cylindrique 22 est mécaniquement accouplé à l'armature 15 à son extrémité opposée à celle reliée au bras de manoeuvre 21 dont la base 21a reliée à l'axe 22 coopère avec une bille 23 logée dans un trou borgne 24 du boîtier 8 de manière qu'une rotation du bras 21 provoque un écartement de sa base 21a du boîtier 8 pour déplacer en translation l'axe 22 en sens opposé au carter 2 à l'encontre de la force de rappel d'un ressort 25 monté autour de l'axe 22 et précontraint entre le fond d'un perçage 26 du boîtier 8 et un collet 27 solidaire de l'axe 22.

Le bras de manoeuvre 21 peut être solidarisé au boîtier 8 par une autre vis de fixation 9 traversant un perçage correspondant périphérique 10 du boîtier 8 et, le cas échéant, une autre entretoise 12, pour permettre à la vis 9 d'être ancrée dans le carter 2 et assurer en même temps le rôle de moyen de fixation supplémentaire du boîtier 8 à ce carter.

Les boîtiers 8 sont fixés au carter 2 de façon que ceux-ci ne débordent pas du tout extérieurement de ce carter.

Lorsque ce carter présente une forme de plaque rectangulaire ou carrée comme représenté aux figures 1 à 4, les deux boîtiers 8, de configuration générale externe cylindrique, sont fixés à ce carter suivant une diagonale sans que leur contour ne déborde des côtés de ce carter.

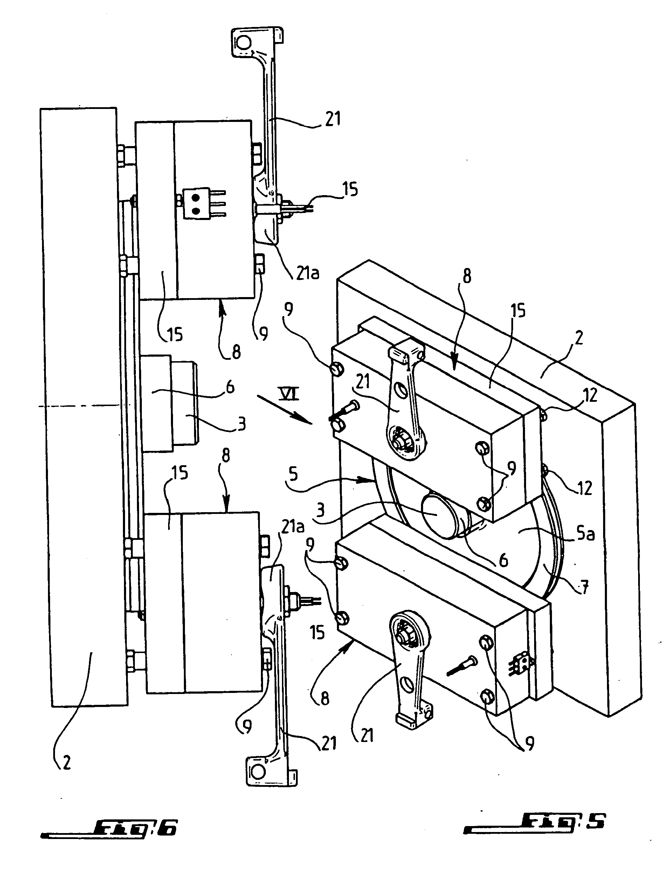

La variante de réalisation représentée aux figures 5 et 6 ne diffère de celle des figures 1 à 4 que par la forme en parallélépipède rectangle de chaque boîtier 8 d'unité d'actionnement fixé au carter 2 sans déborder de celui-ci. La figure 5 montre ainsi que deux boîtiers 8 sont fixés au carter 2 en forme de plaque radialement de part et d'autre du disque de frein 5 en s'étendant parallèlement l'un à l'autre suivant leur longueur et parallèlement aux côtés opposés du carter 2 à proximité de ceux-ci.

Selon la variante de réalisation représentée en figure 7, les deux boîtiers 8 sont en forme de parallélépipède carré et sont fixés au carter 2 de la même manière que les boîtiers 8 des variantes de réalisation précédentes en étant diagonalement opposés l'un de l'autre relativement à la forme en parallélépipède rectangle du carter 2 et en ayant leurs propres diagonales respectives alignées avec celle de la face rectangulaire correspondante du carter 2.

Le dispositif de freinage représenté aux figures 1 à 6 peut être équipé d'un détecteur, non représenté, de position de l'armature mobile 15.

Selon une variante de réalisation, les deux garnitures de friction annulaires 7 peuvent être fixées, par exemple par collage, respectivement à l'armature mobile 15 et à une pièce rapportée, non représentée, au carter 2, ces deux garnitures étant bien entendu situées de part et d'autre du disque de frein 5.

Le dispositif de freinage de l'invention est avantageux en ce qu'il permet de fixer un ou plusieurs freins au carter de support du moteur électrique en fonction des couples de freinage souhaités liés à l'application du dispositif de freinage. Ainsi, pour augmenter le couple de freinage, il suffit d'ajouter un ou plusieurs autres boîtiers d'unité de freinage au carter de support pour freiner le même disque de frein. Toujours dans le cadre d'augmenter le couple de freinage, il est également possible de changer la taille du disque de frein ou d'utiliser une configuration multi-disques, connue en soi, dès l'instant où le ou les freins peuvent être fixés au carter de support sans déborder de celui-ci, le nombre de freins installés sur le disque de frein mobile n'étant limité que par la place disponible autour du carter de support et la résistance des éléments mécaniques. Le dispositif de l'invention non seulement fournit une solution modulaire de frein et assure un encombrement le plus réduit possible, mais n'ajoute pas d'inertie sur la partie tournante du fait que le disque de frein peut être réalisé avec une âme en aluminium. Le type de frein utilisé peut être adapté à la demande de l'utilisateur. Par exemple, il est possible d'utiliser un frein de sécurité à pression de ressorts et à défreinage hydraulique, pneumatique, électrique, manuel, etc... ou d'utiliser un frein de service actionné par pression hydraulique ou pneumatique, sans sortir du cadre de la présente invention.

## Revendications

1. Dispositif de freinage d'un arbre rotatif (3) d'une source d'entraînement (1), telle qu'un moteur électrique, solidaire d'un carter de support (2), et comprenant au moins un disque de frein (5) solidaire en rotation de l'arbre rotatif (3) et axialement mobile à ce dernier et au moins une unité d'actionnement logée dans un boîtier (8) solidaire du carter de support (2) et par laquelle le disque de frein (5) peut être déplacé axialement pour le presser contre une partie du carter de support (2) et freiner l'arbre rotatif (3) par l'intermédiaire de garnitures de friction (7), **caractérisé en ce que** le boîtier (8) de l'unité d'actionnement est fixé au carter de support (2) à une position radiale du disque de frein (5) par des moyens de fixation (9) situés à l'extérieur du disque de frein (5) de façon que le boîtier (8) de l'unité d'actionnement forme avec le carter de support (2) un étrier fixe de frein.

2. Dispositif selon la revendication 1, **caractérisé en ce que** les moyens de fixation comprennent des vis (9) traversant respectivement des perçages (10) du boîtier (8) de l'unité d'actionnement situés à la périphérie externe de ce boîtier et s'étendant parallèlement à l'arbre rotatif (3) en étant ancrées dans des trous taraudés (11) du carter de support (2).

3. Dispositif selon la revendication 2, **caractérisé en ce que** les vis de fixation (9) traversent des entretoises (12) interposées entre le boîtier (8) de l'unité d'actionnement et le carter de support (2) et vissées dans des trous taraudés (11a) de ce carter coaxiaux aux trous taraudés (11) d'ancrage des vis (9).

4. Dispositif selon l'une des revendications précédentes, **caractérisé en ce que** deux garnitures de frein annulaires (7) sont disposées respectivement entre d'une part le disque de frein (5) et la partie correspondante du carter de support (2) et d'autre part un organe commandé axialement mobile (15) de l'unité d'actionnement et le disque de frein (5).

5. Dispositif selon la revendication 4, **caractérisé en ce que** les deux garnitures de friction (7) sont fixées par collage soit de chaque côté du disque de frein (5) au bord externe de ce dernier, soit à l'organe commandé axialement mobile (15) et à une pièce rapportée du carter de support (2).

6. Dispositif selon l'une des revendications précédentes, **caractérisé en ce qu'**il comprend deux ou plusieurs unités d'actionnement dont les boîtiers (8) sont fixés au carter de support (2) radialement au disque de frein (5) en étant régulièrement espacés autour de ce dernier.

7. Dispositif selon l'une des revendications précédentes, **caractérisé en ce que** le disque de frein (5) comprend une âme (5a) en aluminium.

8. Dispositif selon l'une des revendications 3 à 7, **caractérisé en ce que** l'unité d'actionnement est du type électromagnétique comprenant une bobine d'inducteur (13) montée dans le boîtier (8) de l'unité d'actionnement et pouvant déplacer axialement une armature (15) mobile dans ce boîtier constituant l'organe commandé à une position active ou inactive de freinage de l'arbre rotatif (3) à laquelle le disque de frein (5) est pressé ou non contre la partie correspondante du carter de support (2).

9. Dispositif selon la revendication 7, **caractérisé en ce que** l'armature mobile (15) est pressée contre la garniture annulaire correspondante (7) du disque de frein (5) par au moins deux ressorts de compression (16) montés précontraints dans le boîtier (8) de l'unité d'actionnement concentriquement à l'arbre rotatif (3) et la bobine d'inducteur (13) peut être alimentée pour rappeler l'armature mobile (15) à sa position inactive de freinage à l'encontre de la force de rappel des ressorts (16).

10. Dispositif selon l'une des revendications 1 à 7, **caractérisé en ce que** l'unité d'actionnement est du type à commande pneumatique ou hydraulique.

11. Dispositif selon l'une des revendications précédentes, **caractérisé en ce que** le boîtier (8) de l'unité d'actionnement est en forme de cylindre ou de parallélépipède rectangle.

## Claims

1. A device for slowing down a rotary shaft (3) of a driving source (1), such as an electric motor, attached to a supporting case (2), and comprising at least one brake disc (5) interdependent in rotation with the rotary shaft (3) and axially mobile on the latter and at least one actuation unit housed in a casing (8) attached to the supporting case (2) and by which the brake disc (5) may be axially displaced so as to press it against a portion of the supporting case (2) and slow down the rotary shaft (3) via friction facings (7), **characterized in that** the casing (8) of the actuation unit is attached to the supporting case (2) at a radial position of the brake disc (5) by attachment means (9) located outside the brake disc (5), so that the casing (8) of the actuation unit forms with the supporting case (2), a fixed brake calliper.

2. The device according to claim 1, **characterized in that** the attachment means comprise screws (9) respectively passing through piercings (10) of the casing (8) of the actuation unit located at the external periphery of this casing and extending parallel to the rotary shaft (3) while being anchored in tapped holes (11) of the supporting case (2).

3. The device according to claim 2, **characterized in that** the fixing screws (9) pass through spacers (12) interposed between the casing (8) of the actuation unit and the supporting case (2) and screwed into tapped holes (11a) of this case, coaxial with the tapped holes (11) for anchoring the screws (9).

4. The device according to one of the preceding claims, **characterized in that** two annular brake facings (7) are respectively positioned between the brake disc (5) and the portion corresponding to the supporting case (2) on the one hand and an axially mobile controlled member (15) of the actuation unit and the brake disc (5) on the other hand.

5. The device according to claim 4, **characterized in that** both friction facings (7) are either adhesively bonded on each side of the brake disc (5) to the external edge of the latter or to the axially mobile controlled member (15) and to an added part of the supporting case (2).

6. The device according to one of the preceding claims, **characterized in that** it comprises two or more actuation units, the casings (8) of which are attached to the supporting case (2) radially to the brake disc (5) while being regularly spaced apart around the latter.

7. The device according to one of the preceding claims, **characterized in that** the brake disc (5) comprises an aluminium core (5a).

8. The device according to one of claims 3 to 7, **characterized in that** the actuation unit is of the electromagnetic type comprising an inductor coil (13) mounted in the casing (8) of the actuation means and able to axially move a mobile frame (15) forming the controlled member to an active or inactive position for slowing down the rotary shaft (3), at which the brake disc (5) is either pressed or not against the corresponding portion of the supporting case (2).

9. The device according to claim 7, **characterized in that** the mobile frame (15) is pressed against the corresponding annular facing (7) of the brake disc (5) by at least two pre-stressed compression springs (16) mounted in the casing (8) of the actuation unit concentrically with the rotary shaft (3) and the inductor coil (13) may be powered for returning the mobile frame (15) to its inactive braking position against the return force of the springs (16).

10. The device according to one of claims 1 to 7, **characterized in that** the actuation unit is of the pneumatic or hydraulic control type.

11. The device according to one of the preceding claims, **characterized in that** the casing (8) of the actuation unit has the shape of a cylinder or a rectangular parallelepiped.

## Patentansprüche

1. Bremsvorrichtung für eine Drehwelle (3) eines Antriebs (1), wie eines Elektromotors, die mit einem Trägerkasten (2) einstückig gebildet ist und mindestens eine Bremsscheibe (5), die mit der Drehwelle (3) drehfest und zu dieser axial beweglich ist, und mindestens eine Betätigungseinheit aufweist, die in einem mit dem Trägerkasten (2) einstückig gebildeten Gehäuse (8) gelagert ist und durch die die Bremsscheibe (5) axial verschoben werden kann, um sie gegen einen Teil des Trägerkastens (2) zu pressen und die Drehwelle (3) mittels Reibbelägen (7) zu bremsen, **dadurch gekennzeichnet, dass** das Gehäuse (8) der Betätigungseinheit mittels Befestigungsmitteln (9), die sich derart außerhalb der Bremsscheibe (5) befinden, dass das Gehäuse (8) der Betätigungseinheit mit dem Trägerkasten (2) eine feste Bremszange bildet, an einer radialen Position der Bremsscheibe (5) an dem Trägerkasten (2) befestigt ist.

2. Vorrichtung nach Anspruch 1, **dadurch gekennzeichnet, dass** die Befestigungsmittel Schrauben (9) aufweisen, die jeweils durch Bohrungen (10) des Gehäuses (8) der Betätigungseinheit hindurchgehen, die sich am äußeren Umfang dieses Gehäuses befinden und sich parallel zur Drehwelle (3) erstrecken, wobei sie in Gewindelöchern (11) des Trägerkastens (2) verankert sind.

3. Vorrichtung nach Anspruch 2, **dadurch gekennzeichnet, dass** die Befestigungsschrauben (9) durch Abstandshalter (12) hindurchgehen, die zwischen dem Gehäuse (8) der Betätigungseinheit und dem Trägerkasten (2) zwischengeschaltet und in Gewindelöchern (11a dieses Kastens koaxial zu den Gewindelöchern (11) zum Verankern der Schrauben (9) verschraubt sind.

4. Vorrichtung nach einem der vorhergehenden Ansprüche, **dadurch gekennzeichnet, dass** zwei ringförmige Bremsbeläge (7) jeweils einerseits zwischen der Bremsscheibe (5) und dem entsprechenden Teil des Trägerkastens (2) und andererseits zwischen einem axial beweglichen gesteuerten Bauteil (15) der Betätigungseinheit und der Bremsscheibe (5) angeordnet sind.

5. Vorrichtung nach Anspruch 4, **dadurch gekennzeichnet, dass** die beiden Reibbeläge (7) durch Verkleben entweder an jeder Seite der Bremsscheibe (5) an deren äußerem Rand oder am axial beweglichen gesteuerten Bauteil (15) sowie an einem aufgesetzten Teil des Trägerkastens (2) befestigt sind.

6. Vorrichtung nach einem der vorhergehenden Ansprüche, **dadurch gekennzeichnet, dass** sie zwei oder mehrere Betätigungseinheiten aufweist, deren Gehäuse (8) radial zu der Bremsscheibe (5) an dem Trägerkasten (2) befestigt sind, wobei sie in gleichmäßigen Abständen um die Bremsscheibe beabstandet sind.

7. Vorrichtung nach einem der vorhergehenden Ansprüche, **dadurch gekennzeichnet, dass** die Bremsscheibe (5) einen Aluminiumkern (5a) aufweist.

8. Vorrichtung nach einem der Ansprüche 3 bis 7, **dadurch gekennzeichnet, dass** die Betätigungseinheit vom elektromagnetischen Typ ist, der eine Feldspule (13) aufweist, die in dem Gehäuse (8) der Betätigungseinheit montiert ist und einen in diesem Gehäuse beweglichen Anker (15), der das gesteuerte Bauteil bildet, axial in eine aktive oder inaktive Bremsposition der Drehwelle (3) verschieben kann, in der die Bremsscheibe (5) gegen das entsprechende Teil des Trägerkastens (2) gepresst wird oder nicht.

9. Vorrichtung nach Anspruch 7, **dadurch gekennzeichnet, dass** der bewegliche Anker (15) durch mindestens zwei Druckfedern (16), die in dem Gehäuse (8) der Betätigungseinheit konzentrisch zu der Drehwelle (3) unter Vorspannung montiert sind, gegen den entsprechenden ringförmigen Belag (7) der Bremsscheibe (5) gepresst wird, und die Feldspule (13) gespeist werden kann, um den beweglichen Anker (15) gegen die Rückstellkraft der Federn (16) in seine inaktive Bremsposition zurückzuführen.

10. vorrichtung nach einem der Ansprüche 1 bis 7, **dadurch gekennzeichnet, dass** die Betätigungseinheit vom pneumatischen oder hydraulischen Antriebstyp ist.

11. Vorrichtung nach einem der vorhergehenden Ansprüche, **dadurch gekennzeichnet, dass** das Gehäuse (8) der Betätigungseinheit in zylindrischer Form oder in Form eines rechteckigen Parallelepipeds vorliegt.
